(19) Europäisches Patentamt
European Patent Office
Office européen des brevets

(11) **EP 2 720 217 A2**

(12) **EUROPEAN PATENT APPLICATION**

(43) Date of publication:
**16.04.2014 Bulletin 2014/16**

(51) Int Cl.:
***G09B 19/00*** *(2006.01)*

(21) Application number: **12199228.3**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.10.2012 TW 101137614**

(71) Applicants:
• **Industrial Technology Research Institute**
**Hsinchu 31040 Taiwan (TW)**
• **National Chiao Tung University**
**Hsinchu, 300 (TW)**

(72) Inventors:
• **Lin, Chung Wei**
**500 Changhua City, Changhua County 500 (TW)**

• **KUO, Lun Chia**
**407 Xitun Dist., Taichung City (TW)**
• **YI, Chih Wei**
**308 BaoshanTownship, Hsinchu County (TW)**
• **CHEN, Tsung Long**
**744 Tainan City (TW)**
• **YEH, Yu Jung**
**302 Zhubei City Hsinchu County (TW)**
• **HUANG, Yi Chen**
**800 Xinxing Dist., Kaohsiung City (TW)**

(74) Representative: **2K Patentanwälte Blasberg Kewitz & Reichel**
**Partnerschaft**
**Schumannstrasse 27**
**60325 Frankfurt am Main (DE)**

(54) **Method for swing result deduction and posture correction and the apparatus of the same**

(57)    An exemplary embodiment provides a method for swing result deduction and posture correction. The method includes performing a coordinate transformation between a sensor frame and an earth frame, deducting the swing result according to at least one piece of sensor information and a swing result deduction analysis, and providing a posture correction advice according to at least one piece of sensor information and a posture correction analysis.

FIG. 1

## Description

### CROSS-REFERENCE TO RELATED APPLICATION

This application claims the priority benefit of Taiwan application serial no. 101137614, filed on October 12, 2012. The entirety of the above-mentioned patent application is hereby incorporated by reference herein and made a part of this specification.

### FIELD OF THE DISCLOSURE

The technical field of the present disclosure is related to a method for swing result deduction and posture correction and the device thereof.

### BACKGROUND

### Description of the Related Art

In the sport of golf, common misplayed shots include a hook, a slice, a pull, a push, a duff and a top, and a golf beginner usually does not know the type of misplayed shot made during practice as well as a correction method. Such a problem may be solved through one-to-one teaching by an instructor; however, due to the lack of accurate swing and golfer body information, an instructor can only instruct a golf beginner on how to correct a body movement from the experience based on a swing result. Such a problem may also be solved by recording swing information and the swing posture of a golf beginner with a high speed camera; however, such an approach may still encounter problems such as image obstruction (blind spot of camera), golfer privacy, an unknown body force application, and detection failure of the rotation angle of a club-face.

In another solution, a pressure sensor is installed on a golf club to record the force application on a club-head and feed back the force of a player's swing and the flying direction of a ball. However, such a golf club requires special fabrication, which is not economical. In yet another solution, a light distribution sensor is added in a striking environment to observe the flying shadow of a ball, determine the flying direction of the ball based on the tangent plane point of the swing, and predict a golf three dimensional movement trajectory. Such a method is not suitable for an outdoor practical swing and but only suitable for an indoor small-range operation.

Therefore, it is necessary to develop a method for swing result deduction and posture correction and a specific structure thereof, so that a golfer who intends to improve the golf skill may correct postures of ball striking by using objective data information. In addition, this set of method and structure may also provide a golf instructor with more precise, objective data to make better advices.

### SUMMARY OF THE DISCLOSURE

One embodiment of the present disclosure provides a method for swing result deduction and posture correction, the method includes performing coordinate transformation between a sensor frame and an earth frame; outputting a swing result according to at least one piece of sensor information and through a swing result deduction analysis method; and outputting a correction advice according to at least one piece of sensor information and through a posture correction analysis method.

Another embodiment of the present disclosure provides an electronic device for swing result deduction and posture correction, capable of receiving sensor information generated by at least one sensor, and the electronic device includes a memory; and a processor including a coordinate transformation module, a swing result deduction module, and a posture correction module. The coordinate transformation module is used for performing coordinate transformation between the coordinates of the at least one sensor and an earth frame; the swing result deduction module is used for outputting a swing result according to the sensor information generated by the at least one sensor and through a swing result deduction analysis method; and the posture correction module is used for outputting a correction advice according to the sensor information generated by the at least one sensor and through a posture correction analysis method.

The foregoing has outlined rather broadly the features and technical advantages of the present disclosure in order that the detailed description of the disclosure that follows may be better understood. Additional features and advantages of the disclosure will be described hereinafter, which form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

## BRIEF DESCRIPTION OF THE DRAWINGS

The disclosure will be described according to the appended drawings in which:

FIG. 1 shows an electronic device for swing result deduction and posture correction according to an embodiment of the present disclosure;

FIG. 2 is a schematic view of the sensor frame-earth frame" transformation according to the present disclosure;

FIG. 3 is a schematic view of misplayed shot types, downswing trajectories, and rotation trends of a club-face;

FIG. 4 shows the determination of the swing result of a duff according to the change of an acceleration value of a golf club according to an embodiment of the present disclosure;

FIG. 5 shows the determination of the swing result of a top according to the change of an acceleration value of a golf club according to an embodiment of the present disclosure;

FIG. 6 is a schematic view of an open club-face according to an embodiment of the present disclosure;

FIG. 7 shows a schematic view of a closed club-face according to an embodiment of the present disclosure;

FIG. 8 is a flow chart of an analysis method for determining a swing result according to an embodiment of the present disclosure;

FIG. 9 shows a structure of swing result deduction and posture correction according to an embodiment of the present disclosure;

FIG. 10 is a flow chart of an analysis method for providing a posture correction advice according to an embodiment of the present disclosure; and

FIG. 11A to FIG. 11D show various manners of connecting a sensor and a golf club according to embodiments of the present disclosure.

## DETAIL EMBODIMENT OF THE PRESENT DISCLOSURE

The method and process in an application scenario of a method and a device for swing result deduction and posture correction provided in the present disclosure are as follows. In an embodiment, a ball striker may dispose a sensor, for example, a movement sensing accessory on the grip of a golf club, place a sensor through a method for connecting a sensor and a golf club, for example, an appendage or a fixation outside a golf club or an insertion in a golf club, and optionally wear a smartphone with a sensing function at the waist. When the movement sensing accessory and the smartphone are respectively positioned, swing practice may start. During each swing practice, a trainee or the ball striker needs to keep still for several seconds during the preparation for a take-away movement, and the movement sensing accessory may measure the current gravity and magnetic force and return the current gravity and magnetic force to a framework including the deduction and posture correction device for calculating a "sensor frame-earth frame" transformation matrix during the current take-away movement. Next, start a swing motion till the swing is completed, and at the same time, the measured sensed information are returned to the framework, so that the framework first transforms all the information back to the sensor frame during the take-away, and then, through a "sensor frame-earth frame" transformation procedure, transforms the sensed information into information using the earth frame as a reference. Next, the framework calculates a swing trajectory, an angle of a club-face and an acceleration value of a golf club, and determines a swing result. When a misplayed shot is made, the framework automatically determines the major cause for an undesirable swing result based on the deduced swing result in combination with the body movement of the ball striker determined by the sensor.

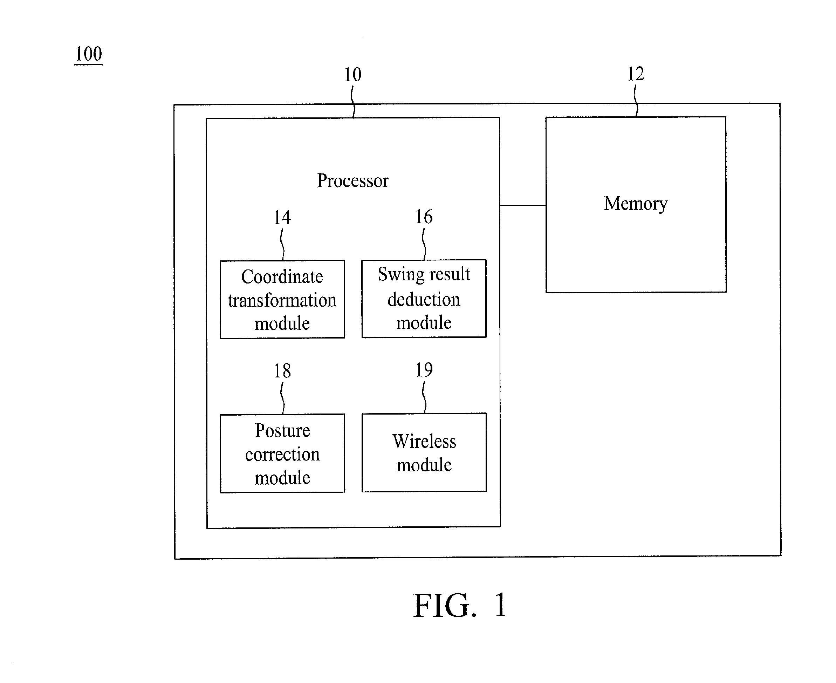

FIG. 1 shows an electronic device 100 for swing result deduction and posture correction according to an embodiment of the present disclosure. The electronic device 100 may receive sensor information generated by at least one sensor (not shown), and the electronic device 100 includes a memory 12 and a processor 10. The processor 10 further includes a coordinate transformation module 14, a swing result deduction module 16, and a posture correction module 18. The functions of all the above modules are described below. The electronic device 100 is a computer unit in this embodiment; however, the electronic device 100 is not limited thereto, and any electronic device 100 having basic computation and processing functions, such as a tablet computer, a smartphone, may be used as the electronic device 100. In an electronic device 100 according to an embodiment of the present disclosure, the processor 10 further includes a wireless module 19. The wireless module 19 may receive signals of other mobile devices in a manner such as, but not limited to, Bluetooth, Wi-Fi or 3G. In this embodiment, other mobile devices may be at least one sensor or movement sensing accessory. A plurality of sensors or movement sensing accessories transmits sensed information to the electronic device 100. The different modules perform computation through the data of these pieces of sensed information and output results to be displayed on a peripheral (for example a screen) of the electronic device 100, or output the results to display devices of the sensors through wireless transmission. In another embodiment of the present disclosure, the result calculated by the electronic device 100 may be transmitted through a cloud to a remote device, for example, a mobile communication device or a home computer unit of a user or the ball striker.

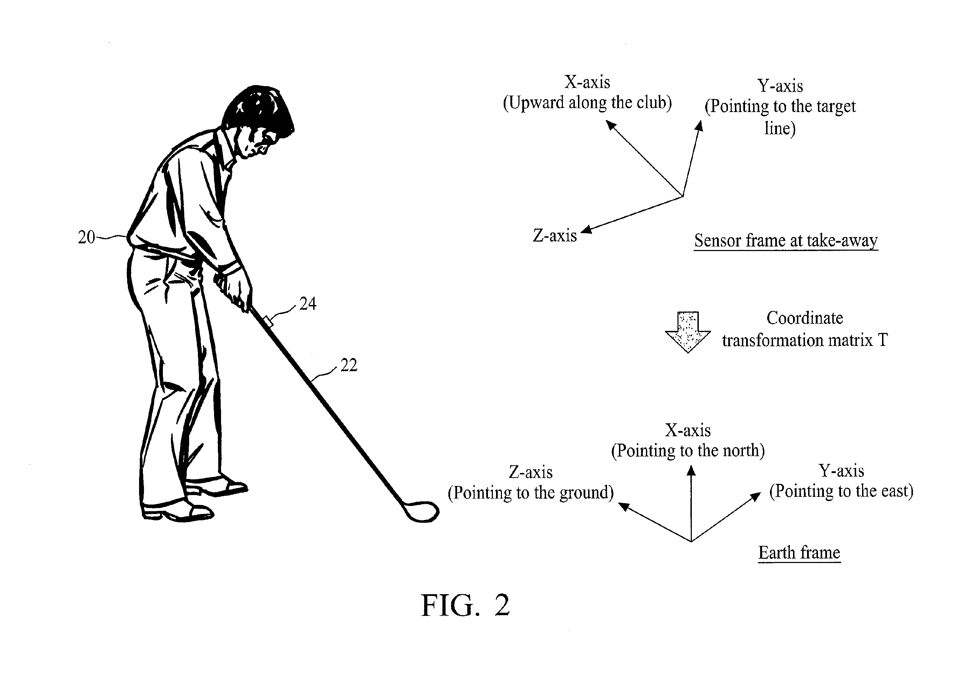

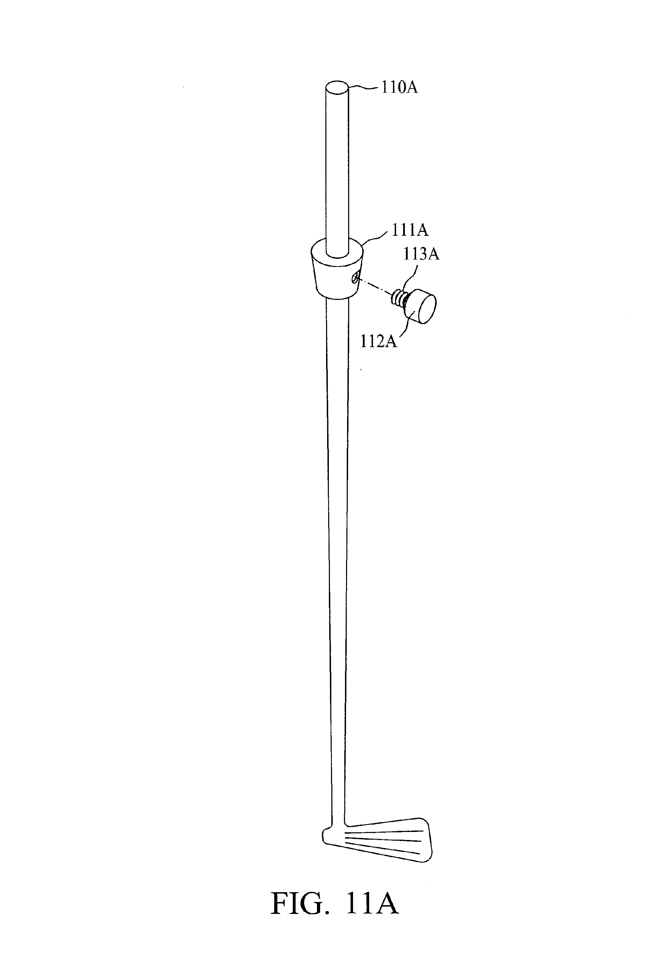

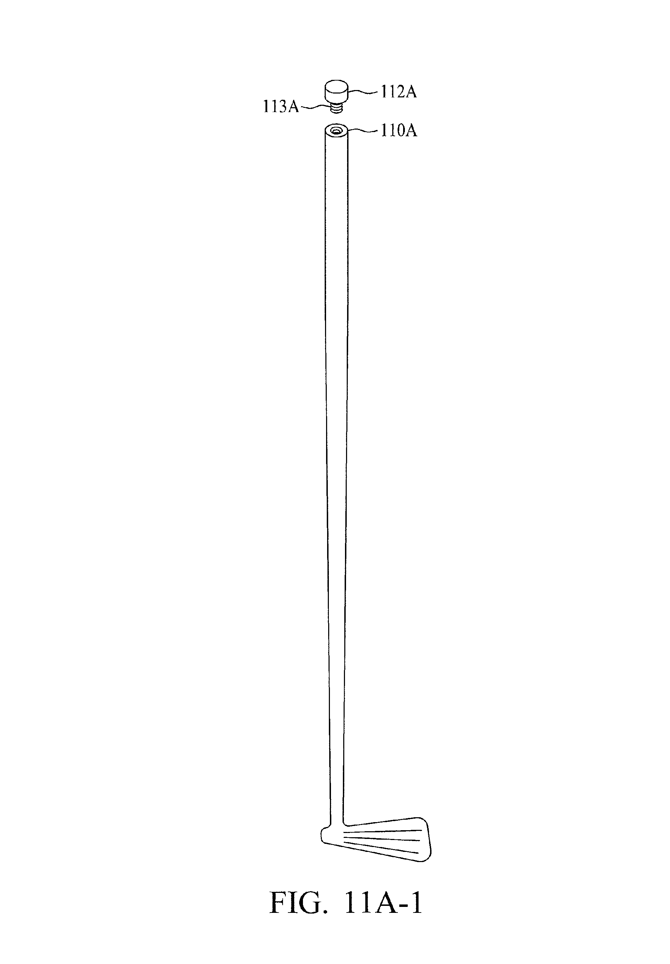

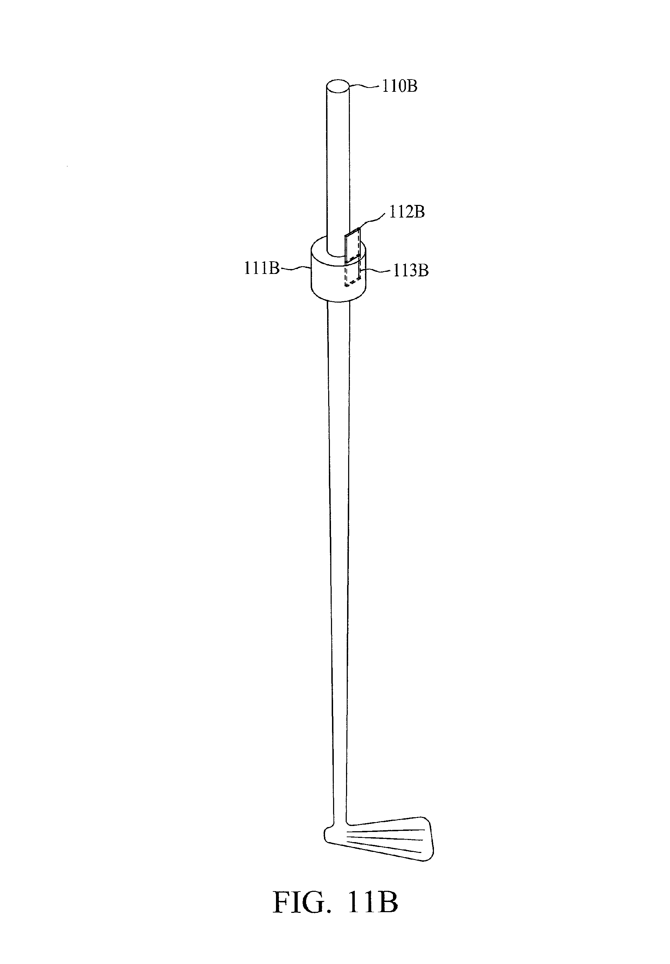

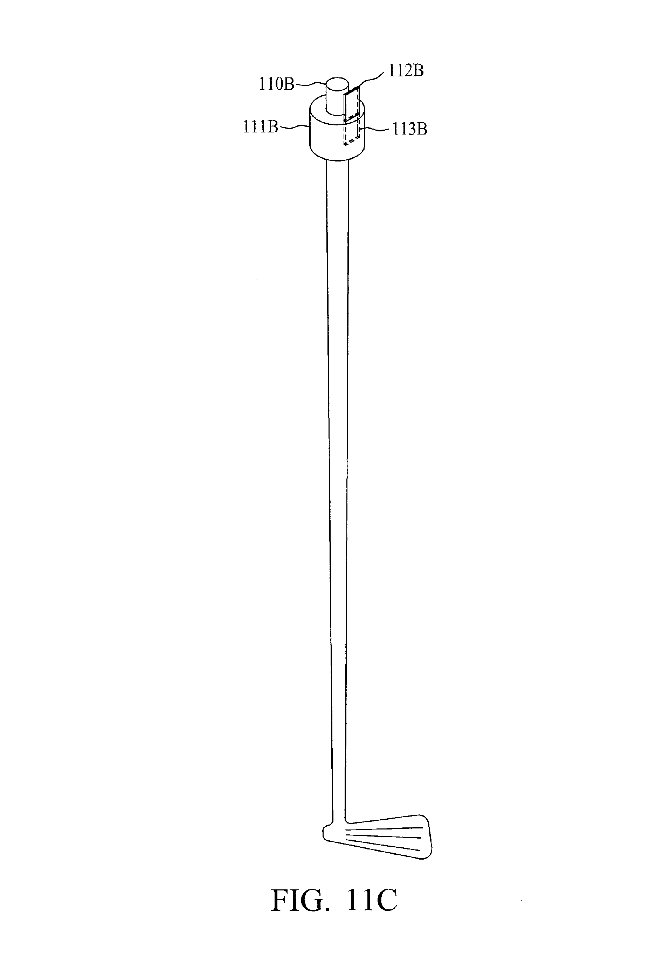

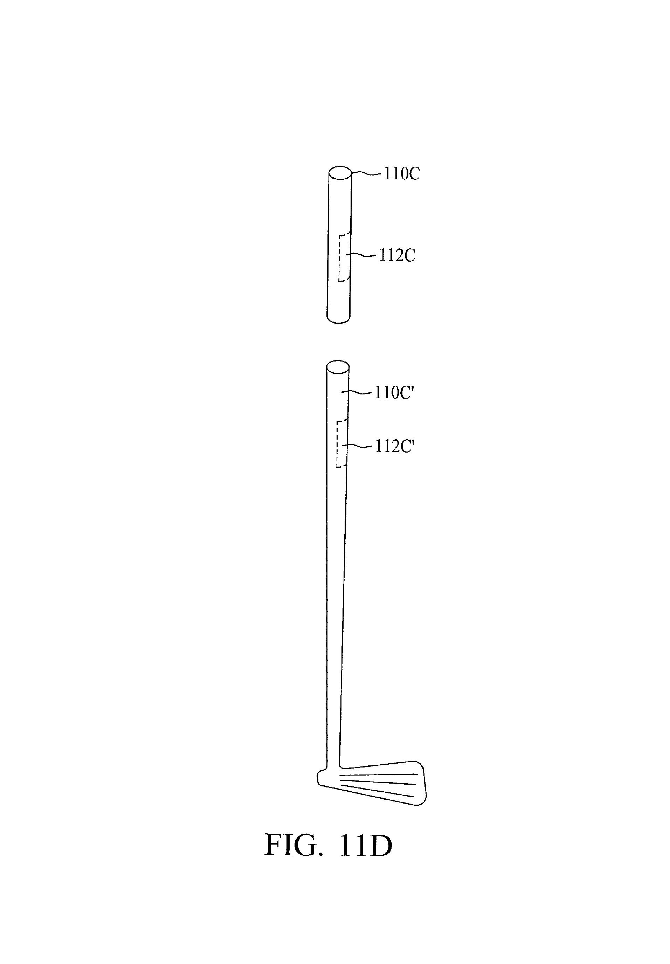

The coordinate transformation module 14 in the electronic device 100 in FIG. 1 is used for "sensor frame-earth frame" coordinate transformation. As shown in FIG. 2, a golf ball striker 20 holds a golf club 22 in hand, while a sensing device 24 is disposed on the golf club 22. The sensing device 24 may be fixed on the golf club 22. For example, as shown in FIG. 11A, a detachable conical sleeve ring 111A slides over a golf club 110A, and then a bolt 113A for connecting a sensing device 112A is screwed in a screw-hole of the sleeve ring 111A (however, the present disclosure is not limited thereto). The sleeve ring 111A may be, but is not limited to, a rubber sleeve ring. On the other hand, the sensing device 112A may also combine with a bolt 113A and be screwed in the screw-hole positioned on top of the golf club 110A as shown in FIG. 11A-1. Further, as shown in FIG. 11B, one sleeve ring 111B having a groove 113B is sleeved over a golf club 110B (in this embodiment, it is shown that the sleeve ring 111B is located below the grip position of a ball striker), a thin-type sensing device 112B (for example, in a form of a card) may be inserted in the groove 113B of the sleeve ring 111B and be fixed by the sleeve ring 111B. The sleeve ring 111B may be, but is not limited to, a rubber sleeve ring. In another embodiment shown in FIG. 11C, it is shown that the sleeve ring 111B is located above the grip position of a ball striker. The sensing device 24 shown in FIG. 2 may also be inserted inside the golf club 22. As shown in FIG. 11D, the golf club 110C may adopt a two-section design, so that a user or the ball striker may detach the golf club 110C into two sections (110C, 110C') and insert the sensing device 112C or 112C' into the gold club. FIG. 11A to FIG. 11C show that a golf club (110A, 110B) may be combined with the sensing device (112A, 112B) without a special customization process.

As sensor information, for example, an acceleration value and a swing trajectory required for the process of determining a swing result is based on the reference of the earth frame, and the sensing device 24 may be unable to be precisely placed along the direction of the club. Therefore, coordinate transformation between a sensor frame and the earth frame is required. A ball striker first keeps still for several seconds during the preparation for a take-away movement, so that the gravity sensor and the magnetic sensor in the sensing device 24 are able to measure the current gravity and magnetic force and returns the current gravity and magnetic force to the framework. As shown in FIG. 2, the sensing device 24 first establishes a sensor frame on the golf club 22, and the basis of the sensor frame during the take-away preparation movement is $S = \{s_x, s_y, s_z\}$, where the X-axis direction points to the ball striker 20 along the club, the Y-axis direction is the target line, and the Z-axis direction is the vector product direction of the X-axis and the Y-axis. The framework, according to the information of gravity and magnetic force, defines the earth frame as follows: the basis of the earth frame is $E = \{e_x, e_y, e_z\}$, and defines that $e_x$ pointing to the north, $e_y$ pointing to the east, and $e_z$ pointing to the ground. To express the basis of the earth frame using the basis of the sensor frame:

$$[e_x]_s = \begin{bmatrix} 1 \\ 0 \\ 0 \end{bmatrix}_{e:s} = \frac{\overrightarrow{M}}{\left\| \overrightarrow{M} \right\|},$$

$$[e_z]_s = \begin{bmatrix} 0 \\ 0 \\ 1 \end{bmatrix}_{e:s} = -\frac{\overrightarrow{g}}{\left\| \overrightarrow{g} \right\|},$$

$$\left[ e_y \right]_s = \begin{bmatrix} 0 \\ 1 \\ 0 \end{bmatrix}_{e:s} = -\frac{\vec{g} \times \vec{M}}{\left\| \vec{g} \times \vec{M} \right\|},$$

, where $\vec{M}$ and $\vec{g}$ are the measured magnetic force and gravity acceleration during the take-away preparation movement, respectively. Therefore, it may be obtained that the transformation matrix $T_{e:s}$ for transformation from the earth frame into the sensor frame is as follows:

$$T_{e:s} = \left[ \frac{\vec{M}}{\left\| \vec{M} \right\|} \quad -\frac{\vec{g} \times \vec{M}}{\left\| \vec{g} \times \vec{M} \right\|} \quad -\frac{\vec{g}}{\left\| \vec{g} \right\|} \right],$$

so that $[v]_s = T_{e:s}[v]_e$ ,
where $[v]_s$ is the sensor frame and $[v]_e$ is the earth frame. The transformation matrix $T_{s:e}$ for transformation from the sensor frame into the earth frame is:

$$T_{s:e} = T_{e:s}^{\,-1}.$$

By adopting the following equations, the sensor frame during the take-away preparation movement may be transformed into the earth frame:

$$\left[v\right]_e = T_{e:s}^{\,-1} \left[v\right]_s = T_{s:e} \left[v\right]_s.$$

In an embodiment, the framework transforms the data returned by the sensor from the sensor frame into the earth frame according to the description below. First, the angular speeds $(\omega_x, \omega_y, \omega_z)$ measured by a gyro sensor in each time of sampling are introduced to obtain a quaternion $Q$. After the sampling is completed, a sensor frame $Q_{n:1}$ at the time of the take-away may be obtained through the vector product multiplication of quaternions $Q$ generated at different sampling points. Next, the sensor frame $Q_{n:1}$ at the time of the take-away is introduced into a corresponding rotation matrix $R$ , and the value of a corresponding acceleration a is taken, so that the acceleration value of the sensor frame at the time of the take-away is obtained. Next, all obtained acceleration values of the sensor frame of the sampling points at the time of the take-away are taken into the transformation matrix $T_{e:s}$ to obtain the acceleration transformed into the "earth frame". The computation equation is as follows:

it is assumed that the sampling rate is $1/\Delta t$ ,

so that

$$\omega = \left( \omega_x, \quad \omega_y, \quad \omega_z \right), \quad \left\| \omega \right\| = \sqrt{\omega_x^{\,2} + \omega_y^{\,2} + \omega_z^{\,2}}, \quad \theta = \left\| \omega \right\| \Delta t,$$

and the rotation is expressed through a quaternion as follows:

$$Q \equiv \begin{bmatrix} q_0 \\ q_1 \\ q_2 \\ q_3 \end{bmatrix} = \begin{bmatrix} \cos\dfrac{\theta}{2} \\ \left(\sin\dfrac{\theta}{2}\right)\dfrac{\omega_x}{\|\omega\|} \\ \left(\sin\dfrac{\theta}{2}\right)\dfrac{\omega_y}{\|\omega\|} \\ \left(\sin\dfrac{\theta}{2}\right)\dfrac{\omega_z}{\|\omega\|} \end{bmatrix}.$$

It may be derived from the quaternion that the rotation matrix $R$ is as follows:

$$R = \begin{bmatrix} q_0{}^2 + q_1{}^2 - q_2{}^2 - q_3{}^2 & 2(-q_0 q_3 + q_1 q_2) & 2(q_0 q_2 + q_1 q_3) \\ 2(q_0 q_3 + q_1 q_2) & q_0{}^2 - q_1{}^2 + q_2{}^2 - q_3{}^2 & 2(q_0 q_1 + q_2 q_3) \\ 2(-q_0 q_2 + q_1 q_3) & 2(q_0 q_1 + q_2 q_3) & q_0{}^2 - q_1{}^2 - q_2{}^2 + q_3{}^2 \end{bmatrix}$$

and $q_0{}^2 + q_1{}^2 + q_2{}^2 + q_3{}^2 = 1$, and $R$ may be simplified into:

$$R = \begin{bmatrix} 1 - 2q_2{}^2 - 2q_3{}^2 & 2(-q_0 q_3 + q_1 q_2) & 2(q_0 q_2 + q_1 q_3) \\ 2(q_0 q_3 + q_1 q_2) & 1 - 2q_1{}^2 - 2q_3{}^2 & 2(q_0 q_1 + q_2 q_3) \\ 2(-q_0 q_2 + q_1 q_3) & 2(q_0 q_1 + q_2 q_3) & 1 - 2q_1{}^2 - 2q_2{}^2 \end{bmatrix}.$$

$Q_n$ is expressed as the quaternion of the nth sampling point in the current sensor frame, the sensor frame at the time of the take-away is the vector product multiplication of the quaternion:

$$Q_{n::1} = Q_n \times Q_{n-1} \ldots \times Q_1.$$

$Q_{n:1}$ is introduced into the rotation matrix $R$ to obtain $R_{n:1}$, so that the measurement data $[v]_{s_n}$ of the sensor at the time of the nth sampling point is transformed into the data $R_{n:1}[v]_{s_n}$ of the sensor frame at the time of the take-away, and is then transformed into the earth frame through the following equation:

$$[v]_e = T_{s:e}[v]_s = T_{s:e}\left(R_{n:1}[v]_{s_n}\right)$$

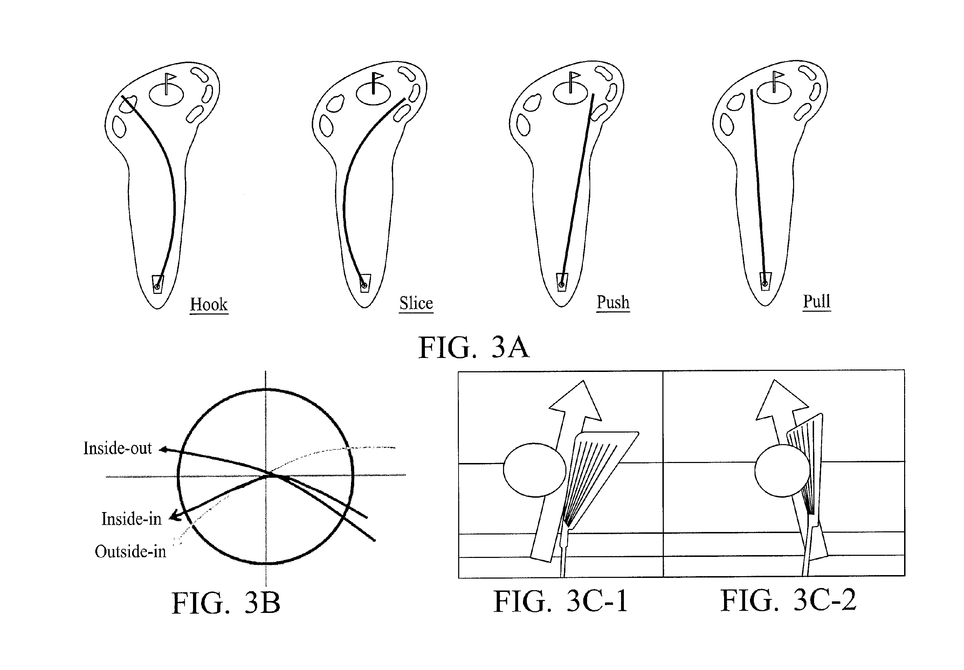

The swing result deduction module 16 in the electronic device 100 in FIG. 1 deduces a swing result through different sensor information. As shown in FIG. 3A, common misplayed shots of golfers include a hook, a slice, a pull, a push, a top, and a duff. In an embodiment, the swing result deduction module 16 may determine what type of misplayed shot a ball striker has made. The sensor information used by the swing result deduction module 16 includes the acceleration value of the swing movement in the three-axis (X, Y, Z), a downswing trajectory, and the trend of the rotation angle of a club-face along the X-axis of a golf club. The practical method of obtaining the acceleration value of the movement of the golf club in the three-axis (X, Y, Z) is already recorded in the previous paragraphs, which is no longer described here. As shown in FIG. 3B, the downswing trajectory includes three possibilities, outside-in, inside-out, and inside-in. In an embodiment, for the downswing trajectory, acceleration value of the movement of the golf club obtained previously may be integrated twice to calculate a trajectory displacement relative to the take-away position (0,0,0). As the information of time is required for integration, time of the sampling point may also be recorded. In addition, as shown in FIG. 3C-1 and FIG. 3C-2, the angle of the club-face may be approximately divided into an open type and a closed type. Seen from the angle of the ball striker, in FIG. 3C-1, the club-face rotates in the clockwise direction along the X-axis, which is defined as an open club-face; and in FIG. 3C-2, the club-face rotates in the counterclockwise direction along the X-axis, which is defined as a closed club-face. In an embodiment, the swing result deduction module 16 performs integration on the three-axis angular speed of the sensor at each time of the sampling point to obtain a three-axis rotation angle (depending on a ZYX-axis rotation sequence), calculates the rotation angle of the time of the sampling point relative to the angle at the time of the take-away, and observes the variation trend of the angle.

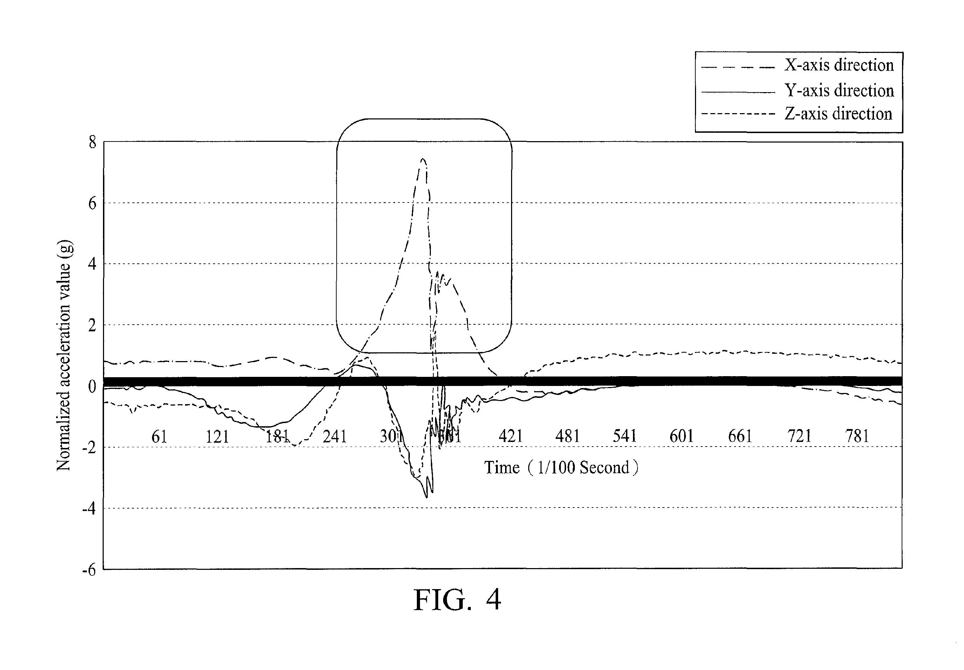

FIG. 4 shows the determination of the swing result of a duff according to the change of the acceleration value measured by a gravity sensor in an embodiment. In FIG. 4, the horizontal axis is time, the vertical axis is a normalized acceleration value, in which the gravity acceleration (g) is taken as a unit, and the three different lines represent the acceleration values of the movement of the club in the directions of X-axis, Y-axis, and Z-axis, respectively. As can be seen from FIG. 4, the acceleration value of the X-axis has two obvious surges between the time points of 241 (1/100 second) to 421 (1/100 second), while the difference between the two peak values is 4g. When the difference of the X-axis acceleration is greater than one predetermined value, for example, 3.5g, the swing result deduction module 16 determines that the swing result is duff.

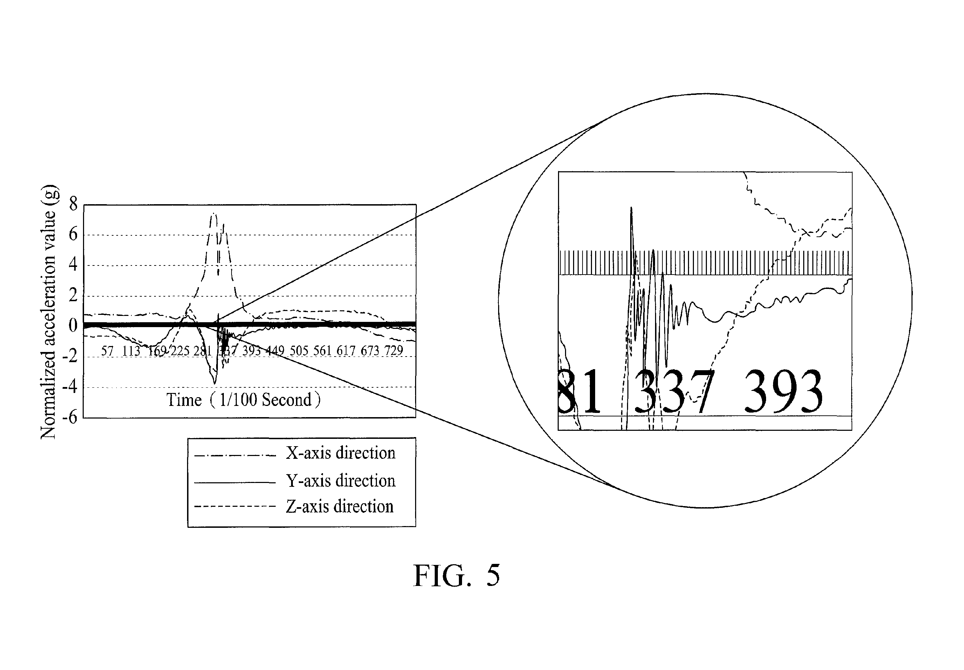

FIG. 5 shows the determination of the swing result of a top according to the change of the acceleration value according to an embodiment. The representation shown in FIG. 5 and in FIG. 4 is identical. As can be seen from FIG. 5, the acceleration value in the previously defined target line, that is, the Y-axis direction, shows obvious intense oscillation between time points of 225 (1/100 second) and 393 (1/100 second), and in FIG. 5 this oscillation is specially enlarged for further explanation. According to the following equation, the variation ($\sigma_y$) of the acceleration ($g_y$) in the target line within one time interval t may be calculated, and when the variation is greater than one specific value, for example, 1.2, the swing result deduction module 16 determines that the swing result is a top.

$$\sigma_y = \frac{\sum_{i=0}^{t-1} g_{y,i} - \overline{g}}{t}$$

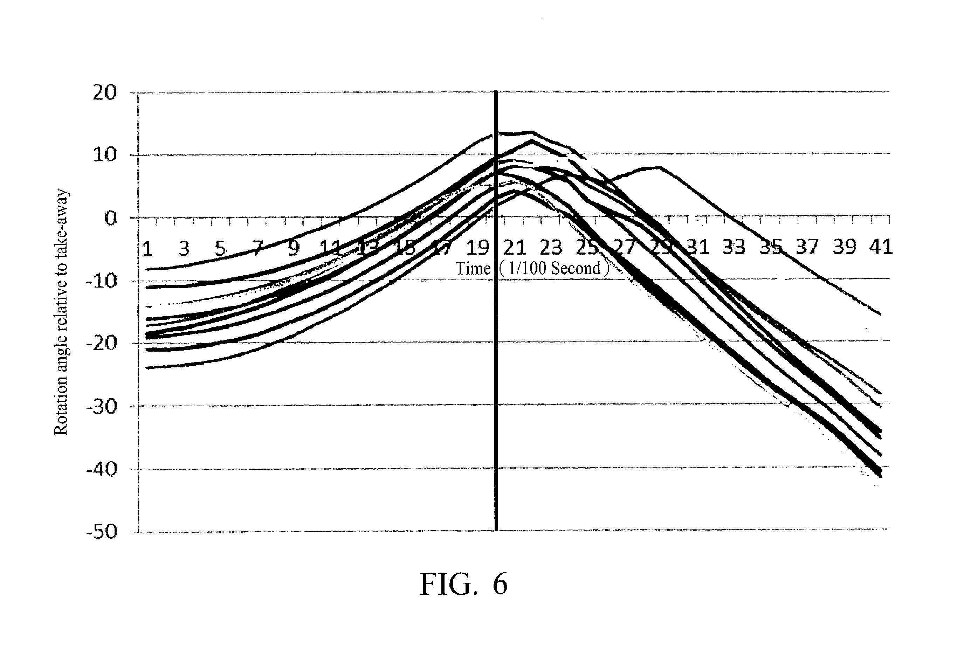

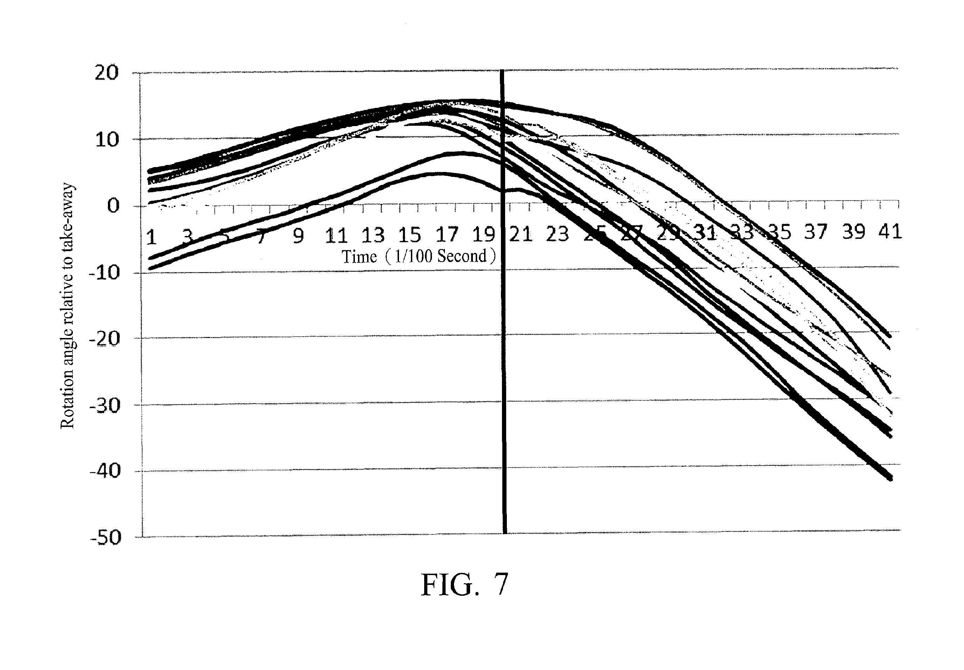

The trend of the rotation angle of the club-face along the X-axis may be illustrated through FIG. 6 and FIG. 7. FIG. 6 shows the determination of an open club-face or a closed club-face based on the variation of the rotation angle of the club-face relative to the angle at the take-away in an embodiment. In FIG. 6, the horizontal axis is time, the vertical axis is rotation angle of the club-face relative to the angle at the take-away, and different lines represent different swing records, respectively. A ball striker makes the golf club contact the ball at the 20th sampling point of the time interval centered at the impact point, so that a local maximum of the vertical axis is generated near this time. As shown in FIG. 6, in an embodiment, before the 20th sampling point, the rotation angle of the club-face within a large part of time relative to the angle at the take-away is a negative value, and the swing result deduction module 16 determines that the swing result is an open club-face. As shown in FIG. 7, in an embodiment, before the 20th sampling point, the rotation angle of the club-face within a large part of time relative to the angle at the take-away is a positive value, and the swing result deduction module 16 determines that the swing result is a closed club-face.

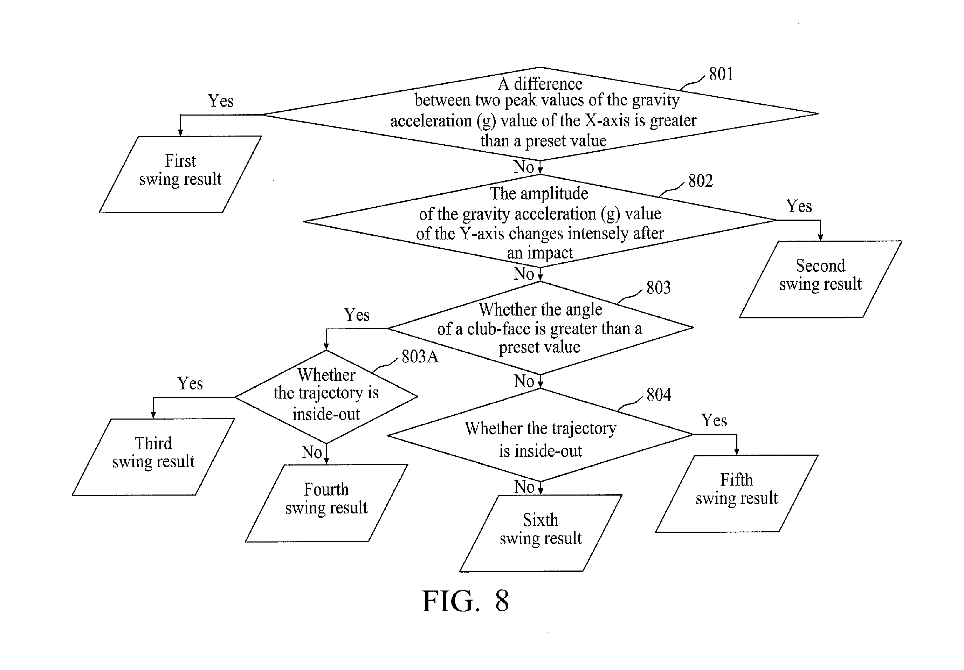

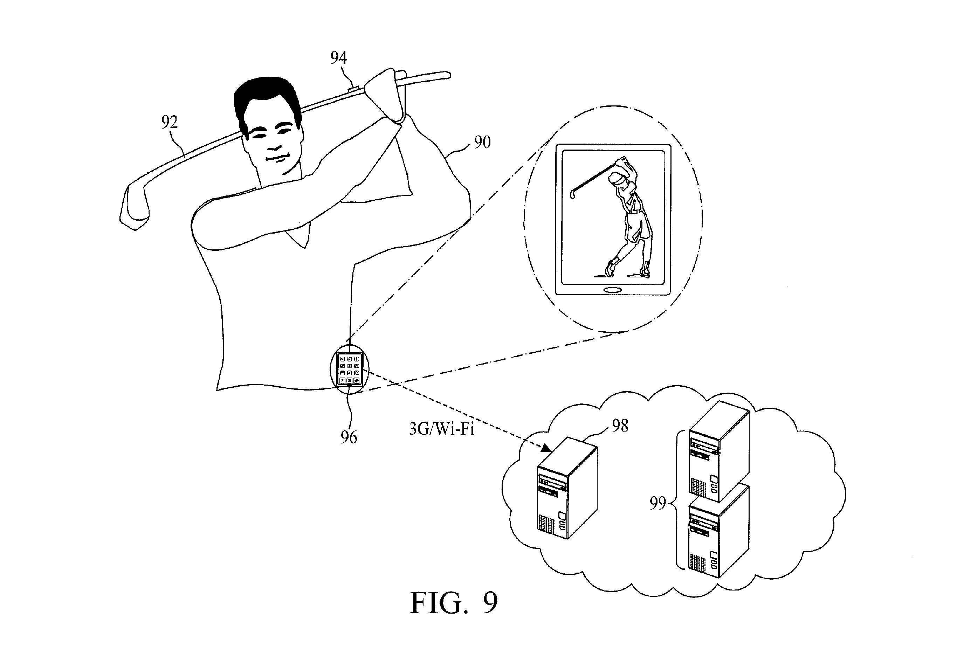

In addition, different downswing trajectories and angles of the club-face may be formed into four different swing results: the combination of downswing trajectory outside-in and the closed club-face make a pull, the combination of downswing trajectory outside-in and the open club-face make a slice, the combination of downswing trajectory inside-out and the closed club-face make a hook, and the combination of downswing trajectory inside-out and the open club-face make a push. Therefore, FIG. 8 is a flow chart of an analysis method for the swing result deduction module 16 to determine a swing result. First, determine whether the acceleration value along the club has at least two regional maximum values (for example, two peaks) 801 with a difference greater than a predetermined value; if yes, output a first swing result (the first swing result in this embodiment is a duff); and if no, perform a next determination step. Subsequently, determine whether the variation ($\sigma_y$) of the acceleration value (by taking g as a unit) along the target line (Y-axis) within one time interval t after an impact is greater than one specific value 802; if yes, output a second swing result (in this embodiment, the second swing result is a top); and if no, perform a next determination step. Subsequently, determine whether the angle of the club-face is greater than a predetermined value 803; if yes, determine whether the movement trajectory of the golf club is inside-out 803A; if the conclusion is yes, output a third swing result (in this embodiment, the third swing result is a hook); and if the conclusion is no, output a fourth swing result (in this embodiment, the fourth swing result is a pull). If the angle of the club-face is not greater than a predetermined value, determine whether the trajectory of the golf club is inside-out 804; if the conclusion is yes, output a fifth swing result (in this embodiment, the fifth swing result is a push); if the conclusion is no, output a sixth swing result (in this embodiment, the sixth swing result is a slice). The posture correction module 18 in the electronic device 100 in FIG. 1 gives a posture correction advice based on different sensor information. FIG. 9 shows the structure according to an embodiment of the present disclosure. A golf ball striker 90 holds a golf club 92 in hand, while a sensor 94 is disposed near the grip of a golf club 92. The sensor 94 may be fixed on the golf club 92, while the golf club 92 is combined with sensor 94 without any special processing. The ball striker 90 may dispose another sensor 96 at the waist to record the body movement of the ball striker 90. The sensor 96 may be any portable element having movement sensing and recording functions, for example, a small-size tablet computer or personal mobile phone. The present disclosure is not limited to the placement of one sensor 96 on the ball striker 90, and when the ball striker 90 wears more sensors, which, for example, may be at the positions such as waist and wrist, more information of human body movement is acquired. Therefore, the advice provided by the posture correction module 18 becomes more precise. The sensor(s) transfers the sensor information to an electronic device 98, for example, a computer unit, through wireless channels such as 3G or Wi-Fi, and after "sensor frame-earth frame" coordinate transformation of the sensor information is completed, the transformed information is provided to the swing result deduction module 16 and the posture correction module 18 in FIG. 1 for determination or analysis. The electronic device 98 may further transmit a calculation result to another electronic device 99 through a cloud technology. In an embodiment of the present disclosure, the electronic device 98 synchronously transfers data to a home computer, an office computer or a mobile phone of the ball striker 90 through cloud transmission, so that the ball striker 90 may watch the swing result and make systematical records at the aforementioned places.

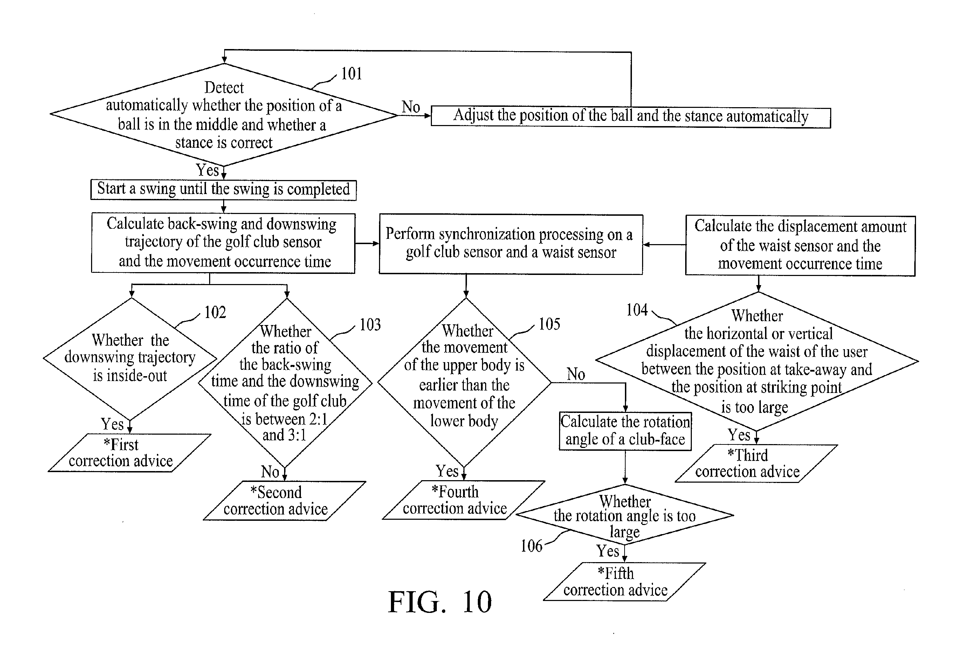

As there are many causes for a misplayed shot, if the type of the cause fails to be determined, it is impossible to give an effective correction advice. For example, in terms of body movement, there are over 10 causes for a hook, which might be related to the gripping of club, stance, center of gravity of the body, wrist turning, over-tight arms, and coordination between the upper body and lower body. In the present disclosure, the sensed movement information from multiple sensors and the causal relationship between body movement and sensed movement information are combined to determine the major cause of an undesirable swing result. See FIG. 10, the portions marked with asterisk are the body movement targets to be determined by the swing result deduction and posture correction framework. With the help of the sensed movement information, in an embodiment, the framework may provide a specific body posture correction advice.

The analysis method used in the posture correction module 18 in FIG. 1 is shown in FIG. 10. First, the ball striker self checks whether the position of a ball is in the middle, and whether his or her stance is normal 101; if no, the ball striker adjusts accordingly and checks again; and if yes, the next step is performed. The next step is to start a swing until the swing is completed, determine whether the movement trajectory of a golf club is inside-out according to the movement trajectory of the golf club and the occurrence time of the movement trajectory 102; if yes, output a first correction advice (in this embodiment, the first correction advice is "the left arm is over-tight"). In addition, according to the movement trajectory of the golf club and the occurrence time thereof, it may also be determined whether the ratio of the back-swing time and the downswing time of the golf club is between 2:1 to 3:1 103; if no, output a second correction advice (in this embodiment, the second correction advice is "bad tempo of back-swing and downswing"). During the process of starting swing until a swing is completed, the posture correction module 18 may at the same time determine whether the horizontal or vertical displacement of the waist of the user between the position at the take-away and the position at the striking points is too large only according to the displacement amount of the waist of a user and a movement occurrence time 104 of the user; and if yes, output a third correction advice (in this embodiment, the third correction advice is "the center of gravity moves laterally or vertically"). During the process of starting swing until a swing is completed, the posture correction module 18 may at the same time determine whether the movement of golf club is earlier than the movement of the waist according to the movement trajectory of golf club and the occurrence time of the movement trajectory as well as the displacement amount of the waist of the user and the movement occurrence time 105 of the user, if yes, output a fourth correction advice (in this embodiment, the fourth correction advice is "the movement of the upper body is earlier than that of the lower body"); if no, perform a next determination step. In the next determination step, determine whether the rotation angle of club-face is too large by calculating the rotation angle of club-face with reference to the sensor information 106, and if yes, output a fifth correction advice (in this embodiment, the fifth correction advice is "the right wrist is over-turned ").

In combination with the illustration in the last paragraph, the recording of time, the movement trajectory of golf club and the displacement amount of the waist of a user, may be separately or together added in the determination process of the posture correction module 18. For example, in the movement trajectory of golf club, the swing motion may be divided into different phases, for example, take-away, back-swing, transition, downswing, follow-through, and completion, to calculate the tempo of back-swing and downswing; the displacement amount of the waist may be used to learn the lateral and vertical movement of the center of gravity. In addition, as a swing result might be affected by more than one movement posture, in an embodiment, sensor information generated by a plurality of sensors are used for deduction. For example, the degree that the left arm is tightly held may be found out through the downswing trajectory; however, it still needs to be determined in advance whether there are influences of ball position and stance; the degree that the right wrist turns may be found out through the rotation angle of the golf club; however, it still needs to be determined in advance whether there is influences of the premature lower body turn.

Although the present disclosure and its advantages have been described in detail, it should be understood that various changes, substitutions and alterations can be made herein without departing from the spirit and scope of the disclosure as defined by the appended claims. For example, many of the processes discussed above can be implemented in different methodologies and replaced by other processes, or a combination thereof.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

**Claims**

1. A method for swing result deduction and posture correction, comprising:

   performing coordinate transformation between a sensor frame and an earth frame;
   outputting a swing result according to at least one piece of sensor information and through a swing result deduction analysis method; and
   outputting a correction advice according to at least one piece of sensor information and through a posture correction analysis method.

2. The method for swing result deduction and posture correction according to Claim 1, wherein the swing result deduction analysis method and the posture correction analysis method comprise:

   calculating a movement trajectory of a golf club, a movement occurrence time of the golf club, and a acceleration value of the movement of the golf club;
   calculating a rotation angle of a club-face; and
   calculating a displacement amount of the waist of a user and a movement occurrence time of the user.

3. The method for swing result deduction and posture correction according to Claim 2, wherein the swing result deduction analysis method comprises:

   determining whether an acceleration value along the club has at least two regional maximum values with a difference between the two regional maximum values greater than a predetermined value, and outputting a first swing result.

4. The method for swing result deduction and posture correction according to Claim 3, wherein the swing result deduction analysis method further comprises:

   determining whether a variation of an acceleration value along a target line within a specific time interval after an impact is greater than one specific value, and outputting a second swing result.

5. The method for swing result deduction and posture correction according to Claim 4, wherein the swing result deduction analysis method further comprises:

determining whether an angle of the club-face is greater than a predetermined value, if yes, determining whether the movement trajectory of the golf club is inside-out; if yes, outputting a third swing result; and if no, outputting a fourth swing result;

if no, determining whether the movement trajectory of the golf club is inside-out; if yes, outputting a fifth swing result; and if no, outputting a sixth swing result.

6. The method for swing result deduction and posture correction according to any of the Claims 2 to 5, wherein the posture correction analysis method comprises:

according to the movement trajectory of the golf club and the movement occurrence time, determining whether the movement trajectory of the golf club is inside-out, if yes, outputting a first correction advice.

7. The method for swing result deduction and posture correction according to any of the Claims 2 to 6, wherein the posture correction analysis method comprises:

according to the movement trajectory of the golf club and the movement occurrence time of the golf club, determining whether the ratio of the back-swing time and the downswing time of the golf club is between 2:1 and 3:1, and if no, outputting a second correction advice.

8. The method for swing result deduction and posture correction according to any of the Claims 2 to 7, wherein the posture correction analysis method comprises:

according to the displacement amount of the waist of the user and the movement occurrence time of the user, determining whether horizontal or vertical displacement of the waist of the user between the position at the take-away and the position at the striking point is greater than a predetermined value, and if yes, outputting a third correction advice.

9. The method for swing result deduction and posture correction according to any of the Claims 2 to 8, wherein the posture correction analysis method comprises:

according to the movement trajectory of the golf club and the movement occurrence time of the golf club, and the displacement amount of the waist of the user and the movement occurrence time of the user, determining whether the movement of the golf club is earlier than the movement of the waist, and outputting a fourth correction advice.

10. The method for swing result deduction and posture correction according to Claim 9, wherein the posture correction analysis method further comprises:

determining whether the rotation angle of the club-face is greater than a predetermined value, and if yes, outputting a fifth correction advice.

11. An electronic device (100) for swing result deduction and posture correction, capable of receiving sensor information generated by at least one sensor, and comprising:

a memory (12); and
a processor (10), comprising:

a coordinate transformation module (14), used for performing coordinate transformation between the coordinates of the at least one sensor and an earth frame;
a swing result deduction module (16), used for outputting a swing result according to the sensor information generated by the at least one sensor and through a swing result deduction analysis method; and
a posture correction module (18), used for outputting a correction advice according to the sensor information generated by the at least one sensor and through a posture correction analysis method.

12. The electronic device for swing result deduction and posture correction according to Claim 11, wherein the processor further comprises a wireless module (19), used for receiving the sensor information.

13. The electronic device for swing result deduction and posture correction according to Claim 11 or 12, wherein the information output by the swing result deduction module and the posture correction module comprises:

a movement trajectory of a golf club, a movement occurrence time of the golf club, an acceleration value of the movement of the golf club, a rotation angle of a club-face, the ratio between a back-swing time and a downswing time of the golf club, a displacement amount of the waist of a user and a movement occurrence time of the user, horizontal or vertical displacement of the waist of the user between the position at the take-away and the position at the striking point.

14. The electronic device for swing result deduction and posture correction according to Claim 13, wherein the swing result deduction analysis method outputs a first swing result according to the sensor information that an acceleration value along the club has at least two regional maximum values with a difference between the at least two regional maximum values greater than a predetermined value.

15. The electronic device for swing result deduction and posture correction according to Claim 13 or 14, wherein the swing result deduction analysis method outputs a second swing result according to the sensor information that a variation of an acceleration value in a target line is greater than one specific value within a specific time interval after an impact.

16. The electronic device for swing result deduction and posture correction according to any of the Claims 13 to 15, wherein the swing result deduction analysis method outputs one of the following: a third swing result, a fourth swing result, a fifth swing result, and a sixth swing result according to the sensor information of an angle of the club-face and the movement trajectory of the golf club.

17. The electronic device for swing result deduction and posture correction according to any of the Claims 13 to 16, wherein the sensor is combined with the golf club in a manner of an appendage outside the golf club or inside the golf club.

18. The electronic device for swing result deduction and posture correction according to any of the Claims 13 to 17, wherein the posture correction analysis method outputs a first correction advice according to the sensor information of the movement trajectory of the golf club, the movement occurrence time of the golf club, and the downswing trajectory is inside-out.

19. The electronic device for swing result deduction and posture correction according to any of the Claims 13 to 18, wherein the posture correction analysis method outputs a second correction advice according to the sensor information of the movement trajectory of the golf club, the movement occurrence time of the golf club, and the ratio of the back-swing time and the downswing time of the golf club.

20. The electronic device for swing result deduction and posture correction according to any of the Claims 13 to 19, wherein the posture correction analysis method outputs a third correction advice according to the sensor information of the displacement amount of the waist of the user, the movement occurrence time of the user, and the horizontal or vertical displacement of the waist of the user between the position at the take-away and the position at the striking point.

21. The electronic device for swing result deduction and posture correction according to any of the Claims 13 to 20, wherein the posture correction analysis method outputs a fourth correction advice according to the sensor information that the movement of the golf club is earlier than the movement of the waist.

22. The electronic device for swing result deduction and posture correction according to Claim 21, wherein the posture correction analysis method outputs a fifth correction advice according to the sensor information that the rotation angle of the club-face is greater than a predetermined value.

23. A golf assembly, comprising:

a golf club; and
a sensing device, comprising at least a gyro sensor, a gravity sensor, and a magnetic sensor,
wherein the sensing device is combined with the golf club in a manner of an appendage outside the golf club or an insertion inside the golf club.

24. The golf assembly according to Claim 23, further comprising an electronic device as in any one of Claims 11-22.

25. The golf assembly according to Claim 23 or 24, wherein the sensing device is screwed to a detachable sleeve ring jacketed on the golf club.

26. The golf assembly according to any of the Claims 23 to 25, wherein the sensing device is screwed to the golf club.

27. The golf assembly according to any of the Claims 23 to 26, wherein the sensing device is inserted in the groove of a sleeve ring jacketed on the golf club.

28. The golf assembly according to Claim any of the claims 26, to 27, wherein the sleeve ring is located below or above a grip position.

29. The golf assembly according to any of the Claims 23 to 28, wherein the sensing device is fixated at the interior surface of the golf club.

100

10

12

Processor

14

16

Coordinate
transformation
module

Swing result
deduction
module

Memory

18

19

Posture
correction
module

Wireless
module

FIG. 1

EP 2 720 217 A2

X-axis
(Upward along the club)

Y-axis
(Pointing to the target line)

Z-axis

Sensor frame at take-away

Coordinate transformation matrix T

X-axis
(Pointing to the north)

Z-axis
(Pointing to the ground)

Y-axis
(Pointing to the east)

Earth frame

FIG. 2

Hook

Slice

Push

Pull

## FIG. 3A

Inside-out

Inside-in

Outside-in

## FIG. 3B

## FIG. 3C-1    FIG. 3C-2

FIG. 4

EP 2 720 217 A2

FIG. 5

FIG. 6

EP 2 720 217 A2

FIG. 7

```
                                                    A difference                    801
              Yes                         between two peak values of the gravity
          ┌──────────────────────     acceleration (g) value of the X-axis is greater
          │                                        than a preset value
          ▼
    ┌──────────┐                                       No │
   ╱  First     ╱                                         ▼
  ╱ swing result╱                           The amplitude                    802
 └──────────┘                       of the gravity acceleration (g) value              Yes
                                    of the Y-axis changes intensely after    ──────────────┐
                                             an impact                                     │
                                              No │                                         ▼
                                                 ▼                                   ┌──────────┐
                                  Whether the angle                 803            ╱  Second    ╱
                 Yes             of a club-face is greater than a                  ╱ swing result╱
          ┌──────────────────        preset value                                └──────────┘
          │
          ▼                  803A
      Whether
     the trajectory is
     inside-out                        No │
  Yes                                     ▼
  ┌────────────────              Whether the trajectory              804      Yes
  │                                   is inside-out              ──────────────┐
  ▼                    No │                                                    │
┌──────────┐             ▼                                                     ▼
╱  Third    ╱      ┌──────────┐                                          ┌──────────┐
╱ swing result╱   ╱  Fourth    ╱              No │                      ╱   Fifth    ╱
└──────────┘     ╱ swing result╱                ▼                      ╱ swing result╱
                └──────────┘            ┌──────────┐                  └──────────┘
                                       ╱   Sixth    ╱
                                      ╱ swing result╱
                                     └──────────┘
```

## FIG. 8

FIG. 9

FIG. 10

EP 2 720 217 A2

— 110A

111A

113A

112A

# FIG. 11A

113A⁓    ⌐112A

⌐110A

FIG. 11A-1

FIG. 11B

110B 112B

111B 113B

FIG. 11C

FIG. 11D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 101137614